# EUROPEAN PATENT APPLICATION

(11) **EP 4 521 663 A1**
(43) Date of publication of application: **12.03.2025**
(21) Application number: 23810775.9
(22) Date of filing: 28.04.2023
(51) Int. Cl.: H04L 1/00, H04L 1/16, H04L 1/18

(54) **COMMUNICATION METHOD AND APPARATUS**

(30) Priority: 27.05.2022 CN 202210593491
(71) Applicant: Huawei Technologies Co., Ltd., Shenzhen, Guangdong 518129 (CN)
(72) Inventor: WANG, Xianbin, Shenzhen, Guangdong 518129 (CN); LIU, Ke, Shenzhen, Guangdong 518129 (CN); ZHANG, Huazi, Shenzhen, Guangdong 518129 (CN); TONG, Jiajie, Shenzhen, Guangdong 518129 (CN); LI, Rong, Shenzhen, Guangdong 518129 (CN); WANG, Jun, Shenzhen, Guangdong 518129 (CN)
(74) Representative: Pfenning, Meinig & Partner mbB
(86) International application number: PCT/CN2023/091880
(87) International publication number: WO 2023/226702

(57) **Abstract**

Embodiments of this application provide a communication method and apparatus, to improve transmission performance of a feedback-based communication system. The method may be implemented according to the following steps: outputting a first bit sequence, where the first bit sequence is obtained by encoding a to-be-encoded bit sequence; determining, based on feedback information from a receive end and the to-be-encoded bit sequence, a bit sequence that is incorrectly decoded by the receive end; and determining, based on the bit sequence that is incorrectly decoded by the receive end, a second bit sequence and outputting the second bit sequence. According to the foregoing method, more information is fed back to a transmit end in the feedback information, so that the transmit end can determine a bit that is incorrectly decoded by the receive end. Therefore, retransmission by the transmit end is more targeted, and an error correction capability of the receive end can be improved. This helps improve transmission performance.

## Description

### CROSS-REFERENCE TO RELATED APPLICATION

This application claims priority to Chinese Patent Application No. 202210593491.X, filed with the China National Intellectual Property Administration on May 27, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Currently, to improve communication reliability, a transmit end and a receive end may transmit a code block based on a feedback mechanism. In the feedback mechanism, after receiving the code block sent by the transmit end, the receive end sends feedback information to the transmit end. The feedback information indicates whether the receive end successfully performs decoding. If the receive end successfully performs decoding, the transmit end sends a next code block. If the receive end fails to perform decoding, the transmit end retransmits the code block, for example, resends the code block to the receive end, or resends the code block to the receive end by equivalently constructing a nested long code, where the code block is equivalent to a nested short code of the long code. After receiving the retransmitted code block, the receive end combines the two received code blocks and then performs decoding again.

Currently, commonly used feedback information is 1-bit acknowledge (ACK)/negative acknowledge (NACK) information. The ACK/NACK information can only feed back whether decoding succeeds, but cannot reflect a decoding correctness degree. Consequently, transmission performance is poor.

### SUMMARY

Embodiments of this application provide a communication method and apparatus, to improve transmission performance of a feedback-based communication system.

According to a first aspect, a communication method is provided. The method may be performed by a transmit end or a chip, a chip system, or a circuit located in the transmit end. The method may be implemented according to the following steps: outputting a first bit sequence, where the first bit sequence is obtained by encoding a to-be-encoded bit sequence; determining, based on feedback information from a receive end and the to-be-encoded bit sequence, a bit sequence that is incorrectly decoded by the receive end; and determining a second bit sequence based on the bit sequence that is incorrectly decoded by the receive end, and outputting the second bit sequence.

In embodiments of this application, the receive end may feed back more information to the transmit end in the feedback information, so that the transmit end can determine a bit that is incorrectly decoded by the receive end. Therefore, retransmission by the transmit end is more targeted, and an error correction capability of the receive end can be improved. This helps improve transmission performance.

In a possible design, the feedback information is a bit sequence obtained by the receive end by decoding a received symbol sequence. According to the foregoing design, the transmit end may determine, via little feedback information, the bit that is incorrectly decoded by the receive end.

In a possible design, the determining a second bit sequence based on the bit sequence that is incorrectly decoded by the receive end includes: determining, based on the bit sequence that is incorrectly decoded by the receive end, a third bit sequence whose length is m', where m' is an integer greater than 0; generating, based on the third bit sequence, a fourth bit sequence whose length is M, where M is an integer greater than 0; and generating the second bit sequence based on the fourth bit sequence.

In the foregoing design, some bits that are incorrectly decoded may be corrected via the feedback information, and remaining bits that are incorrectly decoded may be corrected by correcting the some bits that are incorrectly decoded. In the foregoing method, the transmit end can indicate an error status of a key subset of a decoding result of the receive end, and does not need to indicate an error status of all bits, so that a retransmission bit rate can be reduced, and performance can be improved.

In a possible design, the third bit sequence represents decoding correctness of m bits, the m bits are a subset of the to-be-encoded bit sequence, and m is an integer greater than or equal to m'.

In a possible design, the third bit sequence indicates a bit that is in the bit sequence obtained by the receive end by decoding the received symbol sequence and that is incorrectly decoded.

In a possible design, the generating the second bit sequence based on the fourth bit sequence includes: generating the second bit sequence based on the fourth bit sequence and the first bit sequence. According to the foregoing design, a retransmission gain can be improved.

In a possible design, the generating the second bit sequence based on the fourth bit sequence and the first bit sequence includes: encoding the fourth bit sequence to obtain an encoding result of the fourth bit sequence; and performing exclusive OR on the encoding result of the fourth bit sequence and the first bit sequence, to obtain the second bit sequence. According to the foregoing design, the retransmission gain can be improved.

In a possible design, the determining, based on the bit sequence that is incorrectly decoded by the receive end, a third bit sequence whose length is m' includes: determining, based on the bit sequence that is incorrectly decoded by the receive end, a fifth bit sequence whose length is m, where an i^{th} bit in the fifth bit sequence indicates decoding correctness of an i^{th} bit in the m bits, and integers greater than 0 and not greater than m are traversed for i; and compressing the fifth bit sequence to obtain the third bit sequence whose length is m', where m' is less than m.

According to the foregoing design, overheads can be further reduced.

In a possible design, (M-m') bits in the fourth bit sequence are frozen bits, m' bits in the fourth bit sequence are the third bit sequence, and m' is less than or equal to M.

In a possible design, a location of the third bit sequence in the fourth bit sequence may be locations of first m' bits that are in the fourth bit sequence and whose bit locations are sorted in descending order based on reliability and/or row weights of a corresponding generator matrix. According to the foregoing design, retransmission reliability can be improved.

In a possible design, the feedback information is a symbol sequence received by the receive end. According to the foregoing design, retransmission can be more targeted, and forward transmission performance can be significantly improved.

In a possible design, the determining, based on the feedback information and the to-be-encoded bit sequence, a bit sequence that is incorrectly decoded by the receive end includes: decoding the symbol sequence to obtain a decoded bit sequence, where a k^{th} bit in the decoded bit sequence is determined based on the symbol sequence and at least one bit that is before a k^{th} bit in the to-be-encoded bit sequence, and integers greater than 1 and less than or equal to a length of the to-be-encoded bit sequence are traversed for k; and if a value of the k^{th} bit in the decoded bit sequence is different from a value of the k^{th} bit in the to-be-encoded bit sequence, the k^{th} bit is a bit that is incorrectly decoded by the receive end.

Generally, a quantity of type-A error bits is small. In the foregoing process, the transmit end may determine a bit in which a type-A error occurs and that is in the symbol sequence received by the receive end, and may exclude a location of a bit in which a type-B error occurs, so that the receive end may be notified, with small overheads, of the location of the bit in which the type-A error occurs. In this way, the receive end can quickly correct an error in initial transmission. This significantly improves error correction performance.

In a possible design, the determining a second bit sequence based on the bit sequence that is incorrectly decoded by the receive end includes: determining a sixth bit sequence whose length is R, where R is a quantity of bits in the to-be-encoded bit sequence, and the sixth bit sequence represents a location of a bit in which a decoding error occurs and that is in the decoded bit sequence; and encoding the sixth bit sequence to obtain the second bit sequence. According to the foregoing design, the receive end may be notified, with small overheads, of the location of the bit in which the type-A error occurs.

In a possible design, the determining a second bit sequence based on the bit sequence that is incorrectly decoded by the receive end includes: determining a sixth bit sequence whose length is R, where R is a quantity of bits in the to-be-encoded bit sequence, and the sixth bit sequence represents a location of a bit in which a decoding error occurs and that is in the decoded bit sequence; compressing the sixth bit sequence to obtain a compressed sixth bit sequence; and encoding the compressed sixth bit sequence to obtain the second bit sequence. According to the foregoing design, overheads can be further reduced.

In a possible design, the determining a second bit sequence based on the bit sequence that is incorrectly decoded by the receive end includes: determining an index of an error bit location pattern, where the error bit location pattern is used to identify the location of the bit in which the decoding error occurs and that is in the decoded bit sequence. The second bit sequence is determined based on the index. According to the foregoing design, the location of the bit that is incorrectly decoded may be indicated with low overheads.

In a possible design, the first bit sequence is obtained by performing polar code encoding on the to-be-encoded bit sequence.

In a possible design, before the second bit sequence is determined based on the bit sequence that is incorrectly decoded by the receive end, it may be determined that a quantity of bits that are incorrectly decoded by the receive end meets a second threshold.

According to a second aspect, a communication method is provided. The method may be performed by a receive end or a chip, a chip system, or a circuit located in the receive end. The method may be implemented according to the following steps: obtaining a symbol sequence; obtaining a decoding result of the symbol sequence; determining that the decoding result is incorrect, and sending feedback information to a transmit end; and obtaining a second bit sequence, and performing error correction on the decoding result based on the second symbol sequence, where the second symbol sequence includes indication information of a bit in which a decoding error occurs.

In embodiments of this application, the receive end may feed back more information to the transmit end in the feedback information, so that the transmit end can determine the bit that is incorrectly decoded by the receive end. Therefore, retransmission by the transmit end is more targeted, and an error correction capability of the receive end can be improved. This helps improve transmission performance.

In a possible design, the method further includes: determining the feedback information based on a signal-to-noise ratio; or determining the feedback information based on a Euclidean distance between the decoding result and the symbol sequence. According to the foregoing design, appropriate feedback information may be selected based on a current channel state. This helps improve the transmission performance.

In a possible design, the determining the feedback information based on a signal-to-noise ratio includes: if the signal-to-noise ratio meets a first condition, determining that the feedback information is a bit sequence obtained by decoding the symbol sequence; or if the signal-to-noise ratio meets a second condition, determining that the feedback information is the symbol sequence.

In a possible design, the first condition is that a signal-to-noise ratio is greater than a first threshold, and the second condition is that the signal-to-noise ratio is less than or equal to the first threshold. Alternatively, the first condition is that the signal-to-noise ratio is greater than or equal to the first threshold, and the second condition is that the signal-to-noise ratio is less than the first threshold.

In a possible design, the determining the feedback information based on a Euclidean distance between the decoding result and the symbol sequence includes: if the Euclidean distance meets a third condition, determining that the feedback information is a bit sequence obtained by decoding the symbol sequence; or if the Euclidean distance meets a fourth condition, determining that the feedback information is the symbol sequence.

In a possible design, the third condition is that the Euclidean distance is greater than or equal to a second threshold and is less than a third threshold, and the fourth condition is that the Euclidean distance is greater than or equal to the third threshold. Alternatively, the third condition is that the Euclidean distance is less than or equal to a second threshold, the fourth condition is that the Euclidean distance is greater than the second threshold and is less than or equal to a third threshold, and a fifth condition is that the Euclidean distance is greater than the third threshold. Alternatively, the third condition is that the Euclidean distance is less than a second threshold, the fourth condition is that the Euclidean distance is greater than or equal to the second threshold and is less than or equal to a third threshold, and a fifth condition is that the Euclidean distance is greater than the third threshold.

The third threshold is greater than the second threshold.

In a possible design, if the Euclidean distance does not meet the third condition or the fourth condition, the receive end may send NACK information to the transmit end.

In a possible design, the feedback information is a bit sequence obtained by the receive end by decoding the received symbol sequence. According to the foregoing design, the transmit end may determine, via little feedback information, the bit that is incorrectly decoded by the receive end.

In a possible design, performing error correction on the symbol sequence based on the second bit sequence includes: determining, based on the second bit sequence, a fourth bit sequence whose length is M, where M is an integer greater than 0; determining, based on the fourth bit sequence, a third bit sequence whose length is m', where the third bit sequence represents decoding correctness of m bits, the m bits are a subset of a to-be-encoded bit sequence, and m is an integer greater than 0; performing error correction on the m bits based on the third bit sequence; and decoding the symbol sequence based on m error-corrected bits.

In the foregoing design, some bits that are incorrectly decoded may be corrected via the feedback information, and remaining bits that are incorrectly decoded may be corrected by correcting the some bits that are incorrectly decoded. Compared with feeding back an error status of all bits, the foregoing design can reduce a retransmission bit rate and improve performance.

In a possible design, the third bit sequence represents decoding correctness of the m bits, and the m bits are a subset of the feedback information.

In a possible design, the third bit sequence indicates a bit that is in the bit sequence obtained by the receive end by decoding the received symbol sequence and that is incorrectly decoded.

In a possible design, the determining, based on the fourth bit sequence, a third bit sequence whose length is m includes: determining that the third bit sequence is m' information bits of the fourth bit sequence.

In a possible design, a location of the third bit sequence in the fourth bit sequence may be locations of first m' bits that are in the fourth bit sequence and whose bit locations are sorted in descending order based on reliability. According to the foregoing design, retransmission reliability can be improved.

In a possible design, the performing error correction on the m bits based on the third bit sequence includes: decompressing the third bit sequence to obtain a fifth bit sequence whose length is m, where an i^{th} bit in the fifth bit sequence indicates decoding correctness of an i^{th} bit in the m bits, and integers greater than 0 and not greater than m are traversed for i; and performing error correction on the m bits based on the fifth bit sequence.

In a possible design, the feedback information is the symbol sequence received by the receive end. According to the foregoing design, retransmission can be more targeted, and forward transmission performance can be significantly improved.

In a possible design, performing error correction on the symbol sequence based on the second bit sequence includes: obtaining, based on the second bit sequence, a sixth bit sequence whose length is R, where R is a quantity of bits in the to-be-encoded bit sequence, and the sixth bit sequence represents a location of a bit in which a decoding error occurs and that is in the decoded bit sequence; and decoding the decoded bit sequence based on the sixth bit sequence.

In the foregoing design, the transmit end notifies, with small overheads, the receive end of a location of a bit in which a type-A error occurs, so that the receive end can quickly correct an error in initial transmission, thereby significantly improving error correction performance.

In a possible design, the obtaining, based on the second bit sequence, a sixth bit sequence whose length is R includes: decoding the second bit sequence to obtain the sixth bit sequence.

In a possible design, the obtaining, based on the second bit sequence, a sixth bit sequence whose length is R includes: decoding the second bit sequence to obtain a decoding result of the second bit sequence; and performing source decompression on the decoding result of the second bit sequence, to obtain the sixth bit sequence.

In a possible design, the symbol sequence is a polar code symbol sequence.

In a possible design, the receive end may send the feedback information to the transmit end when the signal-to-noise ratio of the received symbol sequence meets the first threshold.

According to a third aspect, this application further provides a communication apparatus. The apparatus is a transmit-side device or a chip in the transmit-side device. The communication apparatus has a function of implementing any method provided in the first aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing corresponding functions of the transmit-side device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a receiver-side device, for example, data or signal receiving and sending. For example, a communication interface may be a transceiver, a circuit, a bus, a module, or another type of communication interface.

In a possible design, the communication apparatus includes corresponding functional modules respectively configured to implement the steps in the foregoing methods. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect. Details are not described herein again.

According to a fourth aspect, this application further provides a communication apparatus. The apparatus is a receiver-side device or a chip in the receiver-side device. The communication apparatus has a function of implementing any method provided in the second aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing corresponding functions of the receiver-side device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a transmit-side device, for example, data or signal receiving and sending. For example, a communication interface may be a transceiver, a circuit, a bus, a module, or another type of communication interface.

In a possible design, the communication apparatus includes corresponding functional modules respectively configured to implement the steps in the foregoing methods. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the second aspect. Details are not described herein again.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect and the possible designs through a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs through a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect, the second aspect, and the possible designs is implemented.

According to an eighth aspect, a computer program product storing instructions is provided. When the instructions are run by a processor, the method in any one of the first aspect, the second aspect, and the possible designs is implemented.

According to a ninth aspect, a chip system is provided. The chip system includes a processor, and may further include a memory, configured to implement the method in any one of the first aspect and the possible designs. The chip system may include a chip, or may include a chip and another discrete component.

According to a tenth aspect, a chip system is provided. The chip system includes a processor, and may further include a memory, configured to implement the method in any one of the second aspect and the possible designs. The chip system may include a chip, or may include a chip and another discrete component.

According to an eleventh aspect, a communication system is provided. The system includes the apparatus (for example, a transmit-side device) according to the first aspect and the apparatus (for example, a receive-side device) according to the second aspect.

For technical effects that can be achieved by the technical solutions in any one of the third aspect to the eleventh aspect, refer to descriptions of technical effects that can be achieved by the technical solutions in either of the first aspect and the second aspect. Details are not described repeatedly.

### BRIEF DESCRIPTION OF DRAWINGS

FIG. 1 is a diagram of polar code encoding according to an embodiment of this application;
FIG. 2 is a diagram of polar code decoding according to an embodiment of this application;
FIG. 3 is a diagram of an architecture of a communication system according to an embodiment of this application;
FIG. 4 is a diagram of interaction between a transmit end and a receive end according to an embodiment of this application;
FIG. 5 is a schematic flowchart of a communication method according to an embodiment of this application;
FIG. 6 is a diagram of a fourth bit sequence according to an embodiment of this application;
FIG. 7 is a diagram of a second bit sequence according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

### (1) Polar (polar) code encoding

Polar code encoding is a channel encoding scheme for which reaching a channel capacity can be strictly proved, and has features such as high performance, low complexity, and a flexible matching manner. Currently, the polar code encoding has been determined by a 3rd generation partnership project (3rd generation partnership project, 3GPP) as a control channel encoding scheme for a 5G control channel enhanced mobile broadband (enhanced mobile broadband, eMBB) scenario.

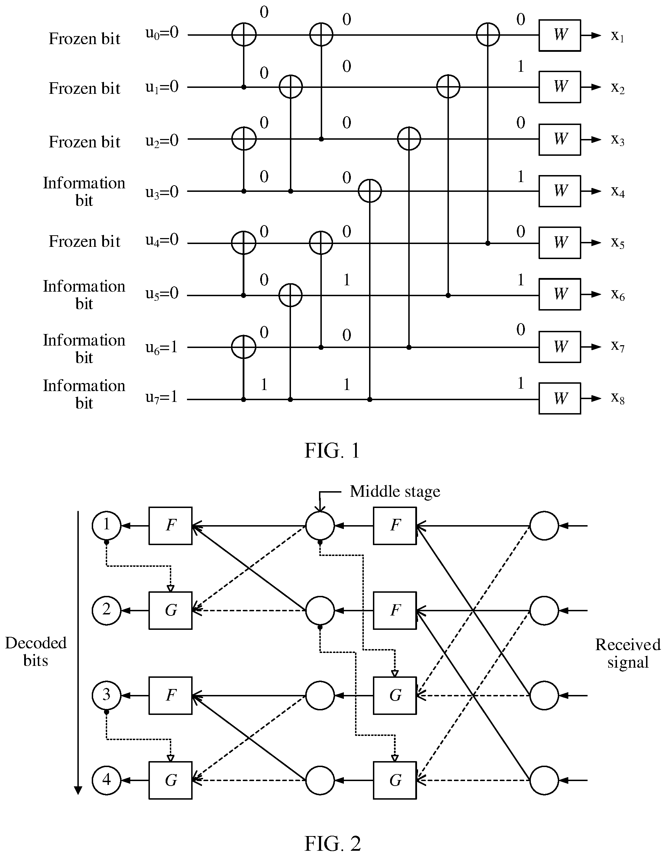

FIG. 1 shows a typical process for encoding a polar code with a length of 8. To-be-encoded bit sequences are classified into two types based on reliability of the to-be-encoded bit sequences: a frozen (frozen) bit and an information bit (data). Generally, a bit with high reliability is set as the information bit (data), a bit with low reliability is set as the frozen bit (frozen), and a value of the frozen bit is generally set to 0, which is known to both a transmit end and a receive end in actual transmission. An encoding code length corresponding to FIG. 1 is 8 bits (bits), and FIG. 1 shows that {u₀, u₁, u₂, u₄} are locations of frozen bits, and {u₃, u₅, u₆, u₇} are locations of information bits. Each circle in each row represents an exclusive OR operation (or referred to as addition modulo 2) between a bit in the row in which the circle is located and a row reached by the circle, and a bit on a right side of the circle is a sum result.

### (2) Polar code decoding

An SC decoding method is an effective decoding algorithm for a polar code. After receiving a signal, a decoding device calculates log likelihood ratios (log likelihood ratios, LLRs) of information bits one by one. If the LLR of the information bit is greater than 0, a decoding result is 0. If the LLR of the information bit is less than 0, a decoding result is 1. A decoding result is 0 regardless of a value of an LLR of a frozen bit. FIG. 2 is a diagram of an SC decoding calculation process. An example of four decoded bits is used. There are eight computing nodes in total in FIG. 2: four F nodes and four G nodes, the F node corresponds to an F function, and the G node corresponds to a G function. Calculation for the F node requires two LLR inputs on a right side of the F node. Calculation for the G node requires two LLR inputs on a right side of the G node and an upper-stage output that is also used as an input. An output can be calculated only after calculation on the inputs is completed. According to the foregoing calculation rule, starting from a received signal on a right side, calculation for the eight nodes is performed in a sequence in FIG. 2, and obtained decoded bits are sequentially ① to ② to ③ to ④. In this case, decoding is completed.

Polar code decoding errors may be classified into a decoding error (which may also be referred to as a type-A error) caused only by receiving an LLR by a channel and a decoding error (which may also be referred to as a type-B error) caused by error propagation.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

Unless otherwise stated, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first bit sequence and a second bit sequence are merely used to distinguish between different bit sequences, but do not indicate different lengths, priorities, importance degrees, or the like of the two bit sequences.

The foregoing describes some terms in embodiments of this application. The following describes technical features in embodiments of this application.

To improve communication reliability, a transmit end and a receive end may transmit a code block based on a feedback mechanism. In other words, after receiving the code block sent by the transmit end, the receive end sends feedback information to the transmit end. Currently, commonly used feedback information is acknowledge (ACK)/negative acknowledge (NACK) information. The ACK/NACK information is indicated by using one bit, and indicates whether the code block is successfully decoded. If decoding succeeds, the transmit end sends a next code block. If the decoding fails, the transmit end retransmits the code block, for example, resends the code block to the receive end, or resends the code block to the receive end by equivalently constructing a nested long code, where the code block is equivalent to a nested short code of the long code. After receiving the retransmitted code block, the receive end combines the two received code blocks and then performs decoding again.

The receive end can only feed back, in the 1-bit ACK/NACK information, whether the decoding succeeds, but cannot reflect a decoding correctness degree. Consequently, retransmission is not targeted, and transmission performance is poor.

Based on this, embodiments of this application provide a communication method and apparatus, to improve transmission performance of a feedback-based communication system. The method and the apparatus are based on a same concept. The method and the apparatus have a similar problem-resolving principle. Therefore, for implementations of the apparatus and the method, refer to each other. No repeated description is provided.

Embodiments of this application may be applied to a plurality of wireless communication fields that require channel encoding. For example, the wireless communication field may include but is not limited to a 5G communication system, a future communication system (for example, a 6G communication system), a satellite communication system, a device-to-device (device-to-device, D2D) communication system, a machine-to-machine (machine-to-machine, M2M) communication system, an internet of things (internet of things, IoT) communication system, an unmanned aerial vehicle communication system, a narrow band-internet of things (narrow band-internet of things, NB-IoT) system, a long term evolution (long term evolution, LTE) system, and three application scenarios of a 5G mobile communication system: eMBB, ultra-reliable low-latency communication (ultra-reliable low-latency communication, URLLC), and massive machine-type communications (massive machine-type communications, mMTC).

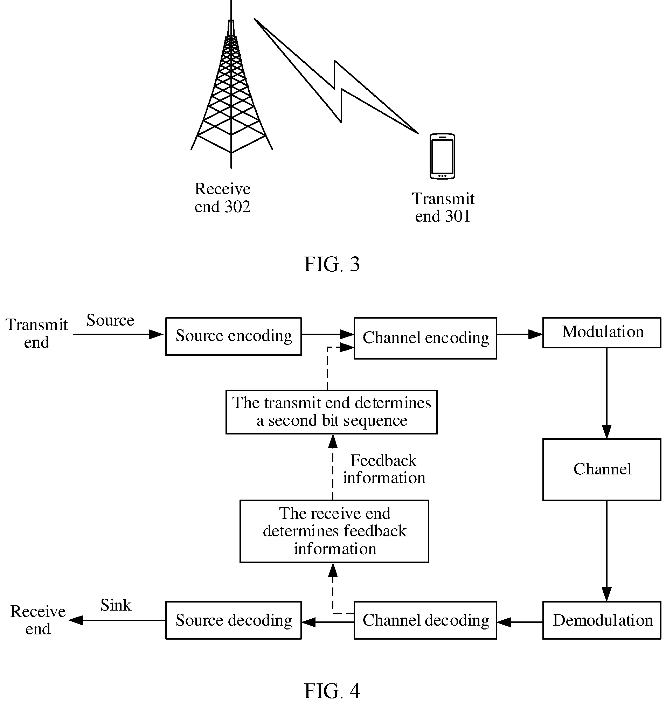

With reference to FIG. 3, the following describes a communication system to which encoding and decoding methods provided in embodiments of this application are applicable. FIG. 3 shows an architecture of a communication system. The communication system includes a transmit end 301 and a receive end 302. The transmit end 301 may be a network device or a terminal device, and the receive end 302 may be a network device or a terminal device. Optionally, when the transmit end 301 is the network device, the receive end 302 may be the terminal device. When the transmit end 301 is the terminal device, the receive end 302 may be the network device or the terminal device. For example, FIG. 3 shows that the transmit end 301 is the terminal device, and the receive end 302 is the network device. It should be noted that a quantity of devices in the communication system shown in FIG. 3 is merely an example, and is not intended to limit this application.

The network device may be a device having a wireless transceiver function or a chip that may be disposed in the network device. The network device includes but is not limited to a base station (next-generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a satellite, an unmanned aerial vehicle, a transmission point (transmission reception point TRP, or transmission point TP), and the like. Alternatively, the network device may be a network node that constitutes a gNB or a transmission point, for example, a baseband unit (BBU), or a distributed unit (distributed unit, DU).

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), an unmanned aerial vehicle, a wireless terminal in a smart grid (smart grid), a wireless terminal in transportation safety (transportation safety), a wireless terminal in a smart city (smart city), a smart wearable device (smart glasses, a smartwatch, a smart headset, or the like), a wireless terminal in a smart home (smart home), or the like. Alternatively, the terminal device may be a chip, a chip module (or a chip system), or the like that may be disposed in the foregoing device. In this application, a terminal device having a wireless transceiver function and a chip that may be disposed in the terminal device are collectively referred to as a terminal device.

FIG. 4 is an example of a diagram of interaction between a transmit end and a receive end. A source of the transmit end is sent on a channel after source encoding, channel encoding, rate matching, and modulation are sequentially performed. After receiving a signal, the receive end performs demodulation, rate de-matching, channel decoding, and source decoding to obtain a sink. Optionally, in embodiments of this application, after performing channel decoding, the receive end may send feedback information to the transmit end. Correspondingly, after receiving the feedback information, the transmit end determines a second bit sequence, and sends the second bit sequence on a channel after performing channel encoding, rate matching, and modulation.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

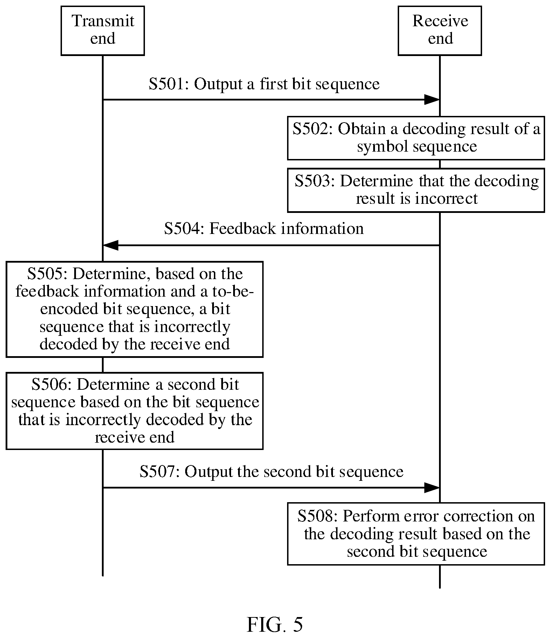

FIG. 5 is a schematic flowchart of a communication method according to this application. The method includes the following steps.

S501. A transmit end outputs a first bit sequence.

The first bit sequence is obtained by encoding a to-be-encoded bit sequence. Specifically, the first bit sequence may be obtained by performing polar code encoding on the to-be-encoded bit sequence. Correspondingly, a receive end may perform polar code decoding on the first bit sequence. Specifically, for the polar code encoding and the polar code decoding, refer to the foregoing term description. Details are not described herein again.

It may be understood that, in embodiments of this application, same encoding and decoding technologies are used by the receive end and the transmit end. Optionally, in the following encoding, a polar code encoding technology may be used, or another encoding technology may certainly be used. This is not specifically limited herein. In this application, only the polar code encoding technology is used as an example for description.

Optionally, the to-be-encoded bit sequence may be a bit sequence obtained through source encoding in FIG. 4. Correspondingly, a process of encoding the to-be-encoded bit sequence to obtain the first bit sequence may correspond to a channel encoding process shown in FIG. 4.

In a possible implementation, the transmit end may modulate the first bit sequence to obtain a symbol sequence. The transmit end outputs the symbol sequence. Correspondingly, the receive end obtains the symbol sequence. Optionally, the modulation process may correspond to a modulation process shown in FIG. 4.

It should be noted that an execution sequence of the foregoing encoding process and the foregoing modulation process is not limited in this application.

In an example description, the transmit end and the receive end have consistent understanding of precision (or a dimension) of the symbol sequence.

S502. The receive end obtains a decoding result of the symbol sequence.

In a possible implementation, the receive end may demodulate and decode the symbol sequence to obtain the decoding result of the symbol sequence. Optionally, a demodulation process may correspond to a demodulation process shown in FIG. 4. A decoding process may correspond to a channel decoding process shown in FIG. 4.

It should be noted that an execution sequence of the demodulation process and the decoding process is not limited in this application.

S503. The receive end determines that the decoding result is incorrect.

Optionally, if the receive end determines that the decoding result is correct, the receive end may send ACK information to the transmit end.

S504. The receive end sends feedback information to the transmit end. Correspondingly, the transmit end obtains the feedback information from the receive end.

Optionally, a quantity of bits of the feedback information may be greater than 1.

In example description, the feedback information may be a bit sequence obtained by the receive end by decoding the received symbol sequence. Alternatively, the feedback information may be the symbol sequence received by the receive end.

In a possible implementation, the receive end may determine the feedback information based on a signal-to-noise ratio. Specifically, if the signal-to-noise ratio meets a first condition, the receive end may determine that the feedback information is the bit sequence obtained by decoding the symbol sequence. If the signal-to-noise ratio meets a second condition, the receive end may determine that the feedback information is the symbol sequence.

In example description, the first condition may be that the signal-to-noise ratio is greater than a first threshold, and the second condition may be that the signal-to-noise ratio is less than or equal to the first threshold. Alternatively, the first condition may be that the signal-to-noise ratio is greater than or equal to a first threshold, and the second condition is that the signal-to-noise ratio is less than the first threshold.

In an implementation, the receive end may encode the feedback information and send encoded feedback information to the transmit end. Details are not described herein again.

In an optional solution, the receive end may send the feedback information to the transmit end when the signal-to-noise ratio is greater than a threshold a. Optionally, if the signal-to-noise ratio is less than or equal to the threshold a, the receive end may send NACK information to the transmit end. The threshold a is less than the first threshold.

In another possible implementation, the receive end may alternatively determine the feedback information based on a Euclidean distance (Euclidean distance) between the decoding result and the symbol sequence. Specifically, if the Euclidean distance meets a third condition, it may be determined that the feedback information is the bit sequence obtained by decoding the symbol sequence; or if the Euclidean distance meets a fourth condition, it may be determined that the feedback information is the symbol sequence.

In example description, the third condition is that the Euclidean distance is greater than or equal to a second threshold and is less than a third threshold, and the fourth condition is that the Euclidean distance is greater than or equal to the third threshold.

Alternatively, the third condition is that the Euclidean distance is greater than a second threshold and is less than or equal to a third threshold, and the fourth condition is that the Euclidean distance is greater than the third threshold.

Alternatively, the third condition is that the Euclidean distance is greater than or equal to a second threshold and is less than or equal to a third threshold, and the fourth condition is that the Euclidean distance is greater than the third threshold.

The third threshold is greater than the second threshold.

In an optional solution, the receive end may send the feedback information to the transmit end when the Euclidean distance is greater than a threshold b. Optionally, if the Euclidean distance is less than or equal to the threshold b, the receive end may send NACK information to the transmit end. The threshold b is less than the second threshold.

In addition, the receive end may further determine the feedback information based on another parameter, for example, determine the feedback information based on an MCS.

S505. The transmit end determines, based on the feedback information and the to-be-encoded bit sequence, a bit sequence that is incorrectly decoded by the receive end.

A specific process is described below with reference to the feedback information.

S506. The transmit end determines a second bit sequence based on the bit sequence that is incorrectly decoded by the receive end.

A specific process is described below with reference to the feedback information.

In an optional solution, the transmit end may perform S507 in the following when a quantity of bits that are incorrectly decoded by the receive end meets the second threshold.

S507. The transmit end outputs the second bit sequence. Correspondingly, the receive end obtains the second bit sequence.

The second bit sequence includes indication information of a bit in which a decoding error occurs.

In a possible implementation, the transmit end may modulate the second bit sequence to obtain a symbol sequence corresponding to the second bit sequence. The transmit end sends, to the receive end, the symbol sequence corresponding to the second bit sequence.

Optionally, the receive end may receive a retransmitted signal sent by the transmit end, and restore the second bit sequence from the retransmitted signal. For example, the second bit sequence is obtained by demodulating the retransmitted signal.

S508. The receive end performs error correction on the decoding result based on the second bit sequence.

In embodiments of this application, the receive end may feed back more information to the transmit end in the feedback information, so that the transmit end can determine the bit that is incorrectly decoded by the receive end. Therefore, retransmission by the transmit end is more targeted, and an error correction capability of the receive end can be improved. This helps improve transmission performance.

The following describes implementations of S505 to S508 with reference to a specific example of the feedback information.

Example 1: The feedback information is the bit sequence obtained by the receive end by decoding the received symbol sequence.

In Example 1, S505 may be implemented in the following manner: The transmit end may compare a t^{th} bit in the feedback information (namely, the bit sequence obtained by the receive end by decoding the received symbol sequence) with a t^{th} bit in the to-be-encoded bit sequence. If the t^{th} bit in the feedback information is consistent with the t^{th} bit in the to-be-encoded bit sequence, it is determined that the bit is decoded correctly; or if the t^{th} bit in the feedback information is inconsistent with the t^{th} bit in the to-be-encoded bit sequence, it is determined that the bit is decoded incorrectly.

In Example 1, S506 may be implemented according to the following steps A1 to A3.

A1: The transmit end determines, based on the bit sequence that is incorrectly decoded by the receive end, a third bit sequence whose length is m', where m' is an integer greater than 0.

The following describes the third bit sequence as an example.

In first example description, the third bit sequence represents decoding correctness of m bits. It may be understood that "decoding correctness of a bit" may refer to whether the bit is correctly decoded.

The m bits are a subset of the feedback information, in other words, the m bits are a subset of the to-be-encoded bit sequence, and m is an integer greater than or equal to m'. In example description, the m bits may be m information bits in the to-be-encoded bit sequence.

In a possible implementation, the third bit sequence may be determined in the following manner: A fifth bit sequence whose length is m is determined based on the bit sequence that is incorrectly decoded by the receive end, and the fifth bit sequence is compressed to obtain the third bit sequence whose length is m'. For example, the transmit end may compress the fifth bit sequence in a manner of source compression or the like.

An i^{th} bit in the fifth bit sequence indicates decoding correctness of an i^{th} bit in the m bits, and integers greater than 0 and not greater than m are traversed for i. For example, any bit in the fifth bit sequence may indicate, based on different values, whether one of the m bits is correctly decoded. For example, if a value is 1, it indicates that decoding is incorrect; or if a value is 0, it indicates that decoding is correct. For another example, if a value is 0, it indicates that decoding is correct; or if a value is 1, it indicates that decoding is incorrect. In example description, m bits in the fifth bit sequence are in one-to-one correspondence with the foregoing m bits.

For ease of understanding, the following uses an example in which a length of the bit sequence obtained by decoding the received symbol sequence by the receive end is 8 to describe the fifth bit sequence. It is assumed that the length of the fifth bit sequence may be 3, and three bits of the fifth bit sequence are respectively used to represent correctness of information bits *u*_{1,1}, *u*_{1,2}, and *u*₁,₄ in the bit sequence obtained by the receive end by decoding the received symbol sequence. If a value of a 1^{st} bit in the fifth bit sequence is 0, it indicates that u1 is correctly decoded; or if a value of a 1^{st} bit in the fifth bit sequence is 1, it indicates that u1 is incorrectly decoded. Alternatively, if a value of a 1^{st} bit in the fifth bit sequence is 1, it indicates that *u*_{1,1} is correctly decoded; or if a value of a 1^{st} bit in the fifth bit sequence is 0, it indicates that *u*_{1,1} is incorrectly decoded. Indication manners of a 2^{nd} bit and a 3^{rd} bit in the fifth bit sequence are similar to an indication manner of the 1^{st} bit, and details are not described again. It should be understood that, merely example description is provided herein, the length of the fifth bit sequence is not limited, and a length and a location of the m bits are not limited.

In the foregoing example description, the third bit sequence indicates the m bits that are predefined, so that overheads can be reduced.

In second example description, the third bit sequence indicates the bit that is in the bit sequence obtained by the receive end by decoding the received symbol sequence and that is incorrectly decoded.

In the foregoing example description, the bit sequence obtained by the receive end by decoding the received symbol sequence as indicated by the third bit sequence has good precision.

A2: The transmit end generates, based on the third bit sequence, a fourth bit sequence whose length is M, where M is an integer greater than 0.

In an implementation, (M-m') bits in the fourth bit sequence are frozen bits, m' bits in the fourth bit sequence are the third bit sequence, and m' is less than or equal to M.

Optionally, a location of the third bit sequence in the fourth bit sequence may be locations of first m' bits that are in the fourth bit sequence and whose bit locations are sorted in descending order based on reliability and/or row weights of a corresponding generator matrix.

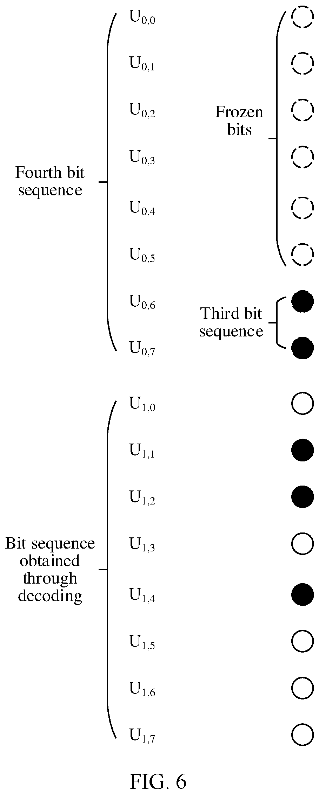

For ease of understanding, the following describes the fourth bit sequence with reference to an example in the first example description in the foregoing step A1. It is assumed that the fourth bit sequence may be as follows: *u*₀,₀ to *u*_{0,5} are 0, and *u*_{0,6} and *u*_{0,7} are the third bit sequence. This is shown in FIG. 6.

A3: The transmit end generates the second bit sequence based on the fourth bit sequence.

In an implementation, the transmit end may generate the second bit sequence based on the fourth bit sequence and the first bit sequence.

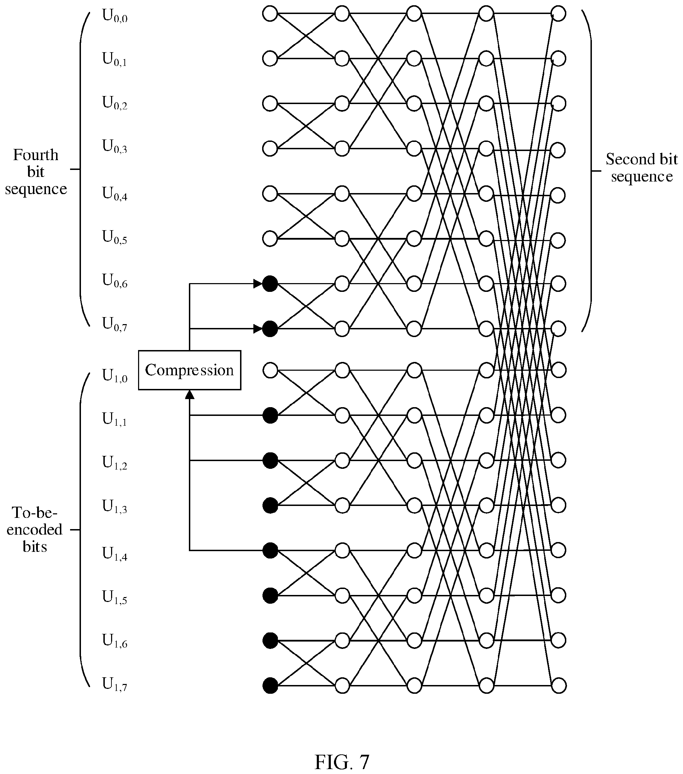

Specifically, the transmit end may encode the fourth bit sequence to obtain an encoding result of the fourth bit sequence. Exclusive OR is performed on the encoding result of the fourth bit sequence and the first bit sequence, and the second bit sequence is determined based on an exclusive OR result. For example, the second bit sequence may be first M bits of the exclusive OR result. With reference to the example description in the implementation of A2, the second bit sequence may be shown in FIG. 7.

It should be noted that, in FIG. 7, an example in which a length of the fourth bit sequence is the same as a length of the first bit sequence is used for only description. In specific implementation, the length of the fourth bit sequence may alternatively be different from the length of the first bit sequence.

If the length of the fourth bit sequence is less than the length of the first bit sequence, exclusive OR may be performed on the fourth bit sequence and some bits of the first bit sequence. For example, exclusive OR is performed on the fourth bit sequence and first M bits of the first bit sequence, exclusive OR is performed on the fourth bit sequence and last M bits of the first bit sequence, or exclusive OR is performed on the fourth bit sequence and M bits at specified locations in the first bit sequence.

If the length of the fourth bit sequence is greater than the length Q of the first bit sequence, exclusive OR may be performed on some bits of the fourth bit sequence and the first bit sequence. For example, exclusive OR is performed on first Q bits of the fourth bit sequence and the first bit sequence, exclusive OR is performed on last Q bits of the fourth bit sequence and the first bit sequence, or exclusive OR is performed on Q bits at specified locations in the fourth bit sequence and the first bit sequence.

In example description, an encoding matrix dimension (or an encoding matrix size) of the encoding result of the fourth bit sequence is the same as an encoding matrix dimension (or an encoding matrix size) of the to-be-encoded bit sequence.

Corresponding to Example 1, S508 may be implemented in the following manner: The receive end may determine the fourth bit sequence based on the second bit sequence, and determine the third bit sequence based on the fourth bit sequence. Then, error correction is performed on m information bits based on the third bit sequence, and the symbol sequence is decoded based on m error-corrected information bits.

Specifically, when the third bit sequence is determined based on the fourth bit sequence, it may be determined that the third bit sequence is m' information bits of the fourth bit sequence. An example of an implementation of step A2 is used as an example, and the receive end may determine that the third bit sequence is *u*_{0,6} and *u*_{0,7} of the fourth bit sequence.

Optionally, when performing error correction on the m information bits based on the third bit sequence, the receive end may decompress the third bit sequence to obtain the fifth bit sequence whose length is m. Error correction is performed on the m information bits based on the fifth bit sequence.

A process in which the receive end obtains the third bit sequence based on the second bit sequence is an inverse process of a process in which the transmit end determines the second bit sequence based on the third bit sequence. For details, refer to related descriptions of the transmit end. Details are not described herein again.

In the foregoing example, the receive end feeds back the decoding result, so that feedback overheads can be reduced. In addition, the transmit end may determine, based on decoding fed back by the receive end, the bits that are incorrectly decoded, so that some bits (namely, the m bits) that are incorrectly decoded can be corrected via the feedback information, and remaining bits that are incorrectly decoded can be corrected by correcting the some bits that are incorrectly decoded. In the foregoing method, the transmit end can indicate an error status of a key subset of the decoding result of the receive end, and does not need to indicate an error status of all bits, so that a retransmission bit rate can be reduced, and performance can be improved.

Example 2: The feedback information is the symbol sequence received by the receive end.

In Example 2, S505 may be implemented according to the following steps B1 and B2.

B1: The transmit end decodes the symbol sequence to obtain a decoded bit sequence, where a k^{th} bit in the decoded bit sequence is determined based on the symbol sequence and at least one bit that is before a k^{th} bit in the to-be-encoded bit sequence, and integers greater than 1 and less than or equal to a length of the to-be-encoded bit sequence are traversed for k.

In this manner, in an SC decoding process, when each bit is decoded in sequence, a previous bit is directly set to a correct value, and then it is further determined whether a decoding error occurs when the current bit is decoded. If the decoding error occurs, a type-A error occurs in the bit. According to this method, a location of a bit in which a type-B error occurs may be excluded.

B2. The transmit end determines, based on the decoded bit sequence and the to-be-encoded bit sequence, the bit sequence that is incorrectly decoded by the receive end.

If a value of the k^{th} bit in the decoded bit sequence is different from a value of the k^{th} bit in the to-be-encoded bit sequence, the k^{th} bit is a bit that is incorrectly decoded by the receive end.

Generally, a quantity of type-A error bits is small. In the foregoing process, the transmit end may determine a bit in which the type-A error occurs and that is in the symbol sequence received by the receive end, so that the receive end may be notified, with small overheads, of a location of the bit in which the type-A error occurs. In this way, the receive end can quickly correct an error in initial transmission. This significantly improves error correction performance.

In Example 2, S506 may be implemented according to the following steps C1 and C2:
C1: The transmit end determines a sixth bit sequence whose length is R, where R is a quantity of bits in the to-be-encoded bit sequence, and the sixth bit sequence represents a location of a bit in which a decoding error occurs and that is in the decoded bit sequence.
C2. The transmit end determines the second bit sequence based on the sixth bit sequence.

In an implementation method, the transmit end may encode the sixth bit sequence to obtain the second bit sequence.

In another implementation method, the transmit end compresses the sixth bit sequence to obtain a compressed sixth bit sequence, and encodes the compressed sixth bit sequence to obtain the second bit sequence.

For example, the transmit end may compress the sixth bit sequence in a manner of source compression or the like.

Corresponding to the foregoing implementation process of S506, S508 may be implemented in the following manner: The receive end may obtain the sixth bit sequence based on the second bit sequence, and decode the decoded bit sequence based on the sixth bit sequence.

Specifically, the receive end may decode the second bit sequence to obtain the sixth bit sequence.

Alternatively, the receive end may decode the second bit sequence to obtain a decoding result of the second bit sequence, and decompress the decoding result of the second bit sequence to obtain the sixth bit sequence.

Alternatively, S506 may be implemented according to the following steps D1 and D2:
D1. The transmit end determines an index of an error bit location pattern, where the error bit location pattern is used to identify a location of a bit in which a decoding error occurs and that is in the decoded bit sequence.
D2. The transmit end determines the second bit sequence based on the index.

In an implementation method, the transmit end may encode the index to obtain the second bit sequence.

Corresponding to the foregoing implementation process of S506, S508 may be implemented in the following manner: The receive end may obtain the index of the error bit location pattern based on the second bit sequence, and determine, based on the index, the location of the bit in which the decoding error occurs and that is in the decoded bit sequence. The receive end may perform error correction on the location of the bit in which the decoding error occurs and that is in the decoded bit sequence.

According to the method described in the foregoing example, the transmit end may determine the bit in which the type-A error occurs and that is in the symbol sequence received by the receive end, so that the receive end can be notified, with small overheads, of the location of the bit in which the type-A error occurs, so that feedback information is more targeted, and forward transmission performance can be significantly improved.

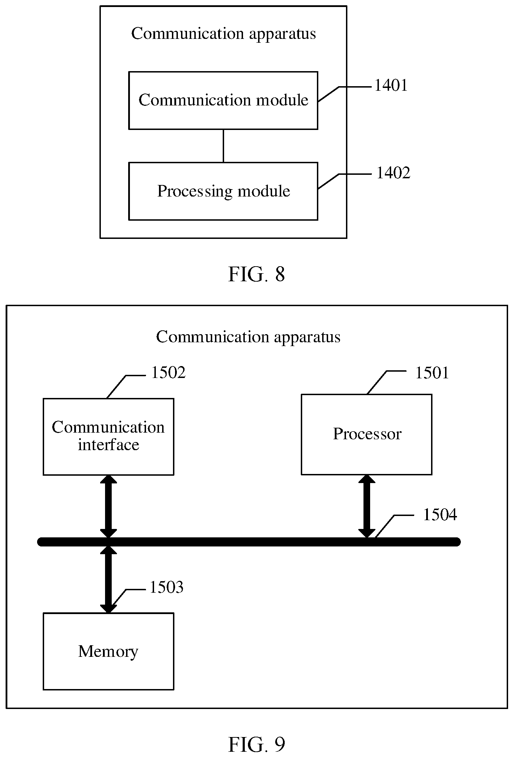

On the basis of a same inventive concept as the method embodiments, an embodiment of this application provides a communication apparatus. A structure of the communication apparatus may be shown in FIG. 8, and the communication apparatus includes a communication module 1401 and a processing module 1402.

In an implementation, the communication apparatus may be specifically configured to implement the method performed by the transmit end in the embodiment in FIG. 5. The apparatus may be the transmit end, or may be a chip, a chip group, or a part, that is of the chip and that is configured to perform a related method function, in the transmit end. The communication module 1401 is configured to: output a first bit sequence, where the first bit sequence is obtained by encoding a to-be-encoded bit sequence; and obtain feedback information from a receive end. The processing module 1402 is configured to: determine, based on the feedback information and the to-be-encoded bit sequence, a bit sequence that is incorrectly decoded by the receive end; and determine a second bit sequence based on the bit sequence that is incorrectly decoded by the receive end. The communication module 1401 is further configured to output the second bit sequence.

For example, the feedback information is a bit sequence obtained by the receive end by decoding a received symbol sequence.

When determining the second bit sequence based on the bit sequence that is incorrectly decoded by the receive end, the processing module 1402 may be specifically configured to: determine, based on the bit sequence that is incorrectly decoded by the receive end, a third bit sequence whose length is m', where the third bit sequence represents decoding correctness of m bits, the m bits are a subset of the to-be-encoded bit sequence, m' is an integer greater than 0, and m is an integer greater than or equal to m'; generate, based on the third bit sequence, a fourth bit sequence whose length is M, where M is an integer greater than 0; and generate the second bit sequence based on the fourth bit sequence.

When generating the second bit sequence based on the fourth bit sequence, the processing module 1402 may be specifically configured to: generate the second bit sequence based on the fourth bit sequence and the first bit sequence.

When generating the second bit sequence based on the fourth bit sequence and the first bit sequence, the processing module 1402 may be specifically configured to: encode the fourth bit sequence to obtain an encoding result of the fourth bit sequence; and perform exclusive OR on the encoding result of the fourth bit sequence and the first bit sequence to obtain the second bit sequence.

For example, (M-m') bits in the fourth bit sequence are frozen bits, m' bits in the fourth bit sequence are the third bit sequence, and m' is less than or equal to M.

When determining, based on the bit sequence that is incorrectly decoded by the receive end, the third bit sequence whose length is m', the processing module 1402 may be specifically configured to: determine, based on the bit sequence that is incorrectly decoded by the receive end, a fifth bit sequence whose length is m; and compress the fifth bit sequence to obtain the third bit sequence whose length is m', where m' is less than m.

For example, a location of the third bit sequence in the fourth bit sequence is locations of first m' bits that are in the fourth bit sequence and whose bit locations are sorted in descending order based on reliability and/or row weights of a corresponding generator matrix.

For example, the feedback information is a symbol sequence received by the receive end.

When determining, based on the feedback information and the to-be-encoded bit sequence, the bit sequence that is incorrectly decoded by the receive end, the processing module 1402 may be specifically configured to: decode the symbol sequence to obtain a decoded bit sequence, where a k^{th} bit in the decoded bit sequence is determined based on the symbol sequence and at least one bit that is before a k^{th} bit in the to-be-encoded bit sequence, and integers greater than 1 and less than or equal to a length of the to-be-encoded bit sequence are traversed for k. If a value of the k^{th} bit in the decoded bit sequence is different from a value of the k^{th} bit in the to-be-encoded bit sequence, the k^{th} bit is a bit that is incorrectly decoded by the receive end.

When determining the second bit sequence based on the bit sequence that is incorrectly decoded by the receive end, the processing module 1402 may be specifically configured to: determine a sixth bit sequence whose length is R, where R is a quantity of bits in the to-be-encoded bit sequence, and the sixth bit sequence represents a location of a bit in which a decoding error occurs and that is in the decoded bit sequence; and encode the sixth bit sequence to obtain the second bit sequence.

When determining the second bit sequence based on the bit sequence that is incorrectly decoded by the receive end, the processing module 1402 may be specifically configured to: determine a sixth bit sequence whose length is R, where R is a quantity of bits in the to-be-encoded bit sequence, and the sixth bit sequence represents a location of a bit in which a decoding error occurs and that is in the decoded bit sequence; compress the sixth bit sequence, to obtain a compressed sixth bit sequence; and encode the compressed sixth bit sequence, to obtain the second bit sequence.

Optionally, the first bit sequence is obtained by performing polar code encoding on the to-be-encoded bit sequence.

In an implementation, the communication apparatus may be specifically configured to implement the method performed by the receive end in the embodiment in FIG. 5. The apparatus may be the receive end, may be a chip, a chip group, or a part, that is of the chip and that is configured to perform a related method function, in the receive end. The communication module 1401 is configured to obtain a symbol sequence. The processing module 1402 is configured to: obtain a decoding result of the symbol sequence, and determine that the symbol sequence is incorrectly decoded. The communication module 1401 is further configured to: send feedback information to a transmit end; and obtain a second bit sequence, where the second bit sequence includes indication information of the bit in which a decoding error occurs. The processing module 1402 is further configured to perform error correction on the decoding result based on the second bit sequence.

Optionally, the processing module 1402 is further configured to: determine the feedback information based on a signal-to-noise ratio; or determine the feedback information based on a Euclidean distance between the decoding result and the symbol sequence.

The processing module 1402 may be specifically configured to: if the signal-to-noise ratio meets a first condition, determine that the feedback information is a bit sequence obtained by decoding the symbol sequence; or if the signal-to-noise ratio meets a second condition, determine that the feedback information is the symbol sequence.

The processing module 1402 may be specifically configured to: if the Euclidean distance meets a third condition, determine that the feedback information is a bit sequence obtained by decoding the symbol sequence; or if the Euclidean distance meets a fourth condition, determine that the feedback information is the symbol sequence.

For example, the feedback information is a bit sequence obtained by decoding the symbol sequence.

When performing error correction on the symbol sequence based on the second bit sequence, the processing module 1402 may be specifically configured to: determine, based on the second bit sequence, a fourth bit sequence whose length is M, where M is an integer greater than 0; determine, based on the fourth bit sequence, a third bit sequence whose length is m', where the third bit sequence represents decoding correctness of m bits, the m bits are a subset of a to-be-encoded bit sequence, m' is an integer greater than 0 and less than or equal to M, and m is an integer greater than or equal to m'; perform error correction on the m bits based on the third bit sequence; and decode the symbol sequence based on m error-corrected bits.

When determining, based on the fourth bit sequence, the third bit sequence whose length is m', the processing module 1402 may be specifically configured to: determine that the third bit sequence is m' information bits of the fourth bit sequence.

When performing error correction on the m bits based on the third bit sequence, the processing module 1402 may be specifically configured to: decompress the third bit sequence to obtain a fifth bit sequence whose length is m; and perform error correction on the m bits based on the fifth bit sequence.

For example, a location of the third bit sequence in the fourth bit sequence is locations of first m' bits that are in the fourth bit sequence and whose bit locations are sorted in descending order based on reliability and/or row weights of a corresponding generator matrix.

For example, the feedback information is the symbol sequence.

When performing error correction on the symbol sequence based on the second bit sequence, the processing module 1402 may be specifically configured to: obtain, based on the second bit sequence, a sixth bit sequence whose length is R, where R is a quantity of bits in the to-be-encoded bit sequence, and the sixth bit sequence represents a location of a bit in which a decoding error occurs and that is in the decoded bit sequence; and decode the decoded bit sequence based on the sixth bit sequence.

When obtaining, based on the second bit sequence, the sixth bit sequence whose length is R, the processing module 1402 may be specifically configured to: decode the second bit sequence to obtain the sixth bit sequence.

When obtaining, based on the second bit sequence, the sixth bit sequence whose length is R, the processing module 1402 may be specifically configured to: decode the second bit sequence to obtain a decoding result of the second bit sequence; and perform source decompression on the decoding result of the second bit sequence, to obtain the sixth bit sequence.

Optionally, the symbol sequence is a polar code symbol sequence.

Division into the modules in embodiments of this application is an example, is merely division into logical functions, and may be another division manner during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, the communication apparatus may be shown in FIG. 9. The apparatus may be a communication device or a chip in the communication device. The communication device may be the terminal device in the foregoing embodiment or the network device in the foregoing embodiment. The apparatus includes a processor 1501 and a communication interface 1502, and may further include a memory 1503. The processing module 1402 may be the processor 1501. The communication module 1401 may be the communication interface 1502. Optionally, the processor 1501 and the memory 1503 may also be integrated together.

The processor 1501 may be a CPU, a digital processing unit, or the like. The communication interface 1502 may be a transceiver, or an interface circuit, for example, a transceiver circuit, a transceiver chip, or the like. The apparatus further includes the memory 1503, configured to store a program executed by the processor 1501. The memory 1503 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 1503 is any other medium that can be used to carry or store an expected program code in a form of an instruction structure or a data structure and that can be accessed by a computer, but is not limited thereto.

The processor 1501 is configured to execute a program code stored in the memory 1503, and is specifically configured to perform an action of the processing module 1402. Details are not described herein in this application. The communication interface 1502 is specifically configured to perform an action of the communication module 1401. Details are not described herein in this application.

In embodiments of this application, a specific connection medium between the communication interface 1502, the processor 1501, and the memory 1503 is not limited. In embodiments of this application, the memory 1503, the processor 1501, and the communication interface 1502 are connected through a bus 1504 in FIG. 9, and the bus is represented by a thick line in FIG. 9. A connection manner between other components is only an example for description, and is not limited thereto. Buses may be classified into an address bus, a data bus, a control bus, and the like. For ease of representation, only one thick line represents the bus in FIG. 9, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement functions of the transmit end in the embodiment in FIG. 5 and a communication apparatus configured to implement functions of the receive end in the embodiment in FIG. 5.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope defined by the following claims and their equivalent technologies of this application.

## Claims

1. A communication method, wherein the method comprises:
outputting a first bit sequence, wherein the first bit sequence is obtained by encoding a to-be-encoded bit sequence;
obtaining feedback information from a receive end;
determining, based on the feedback information and the to-be-encoded bit sequence, a bit sequence that is incorrectly decoded by the receive end;
determining a second bit sequence based on the bit sequence that is incorrectly decoded by the receive end; and
outputting the second bit sequence.

2. The method according to claim 1, wherein the feedback information is a bit sequence obtained by the receive end by decoding a received symbol sequence.

3. The method according to claim 2, wherein the determining a second bit sequence based on the bit sequence that is incorrectly decoded by the receive end comprises:
determining, based on the bit sequence that is incorrectly decoded by the receive end, a third bit sequence whose length is m', wherein the third bit sequence represents decoding correctness of m bits, the m bits are a subset of the to-be-encoded bit sequence, m' is an integer greater than 0, and m is an integer greater than or equal to m';
generating, based on the third bit sequence, a fourth bit sequence whose length is M, wherein M is an integer greater than 0; and
generating the second bit sequence based on the fourth bit sequence.

4. The method according to claim 3, wherein the generating the second bit sequence based on the fourth bit sequence comprises:
generating the second bit sequence based on the fourth bit sequence and the first bit sequence.

5. The method according to claim 4, wherein the generating the second bit sequence based on the fourth bit sequence and the first bit sequence comprises:
encoding the fourth bit sequence to obtain an encoding result of the fourth bit sequence; and
performing exclusive OR on the encoding result of the fourth bit sequence and the first bit sequence, to obtain the second bit sequence.

6. The method according to any one of claims 3 to 5, wherein the determining, based on the bit sequence that is incorrectly decoded by the receive end, a third bit sequence whose length is m' comprises:
determining, based on the bit sequence that is incorrectly decoded by the receive end, a fifth bit sequence whose length is m; and
compressing the fifth bit sequence to obtain the third bit sequence whose length is m', wherein m' is less than m.

7. The method according to any one of claims 3 to 6, wherein (M-m') bits in the fourth bit sequence are frozen bits, m' bits in the fourth bit sequence are the third bit sequence, and m' is less than or equal to M.

8. The method according to claim 7, wherein a location of the third bit sequence in the fourth bit sequence is locations of first m' bits that are in the fourth bit sequence and whose bit locations are sorted in descending order based on reliability and/or row weights of a corresponding generator matrix.

9. The method according to claim 1, wherein the feedback information is a symbol sequence received by the receive end.

10. The method according to claim 9, wherein the determining, based on the feedback information and the to-be-encoded bit sequence, a bit sequence that is incorrectly decoded by the receive end comprises:
decoding the symbol sequence to obtain a decoded bit sequence, wherein a k^{th} bit in the decoded bit sequence is determined based on the symbol sequence and at least one bit that is before a k^{th} bit in the to-be-encoded bit sequence, and integers greater than 1 and less than or equal to a length of the to-be-encoded bit sequence are traversed for k; and
if a value of the k^{th} bit in the decoded bit sequence is different from a value of the k^{th} bit in the to-be-encoded bit sequence, the k^{th} bit is a bit that is incorrectly decoded by the receive end.

11. The method according to claim 10, wherein the determining a second bit sequence based on the bit sequence that is incorrectly decoded by the receive end comprises:
determining a sixth bit sequence whose length is R, wherein R is a quantity of bits in the to-be-encoded bit sequence, and the sixth bit sequence represents a location of a bit in which a decoding error occurs and that is in the decoded bit sequence; and
encoding the sixth bit sequence to obtain the second bit sequence.

12. The method according to claim 10, wherein the determining a second bit sequence based on the bit sequence that is incorrectly decoded by the receive end comprises:
determining a sixth bit sequence whose length is R, wherein R is a quantity of bits in the to-be-encoded bit sequence, and the sixth bit sequence represents a location of a bit in which a decoding error occurs and that is in the decoded bit sequence;
compressing the sixth bit sequence to obtain a compressed sixth bit sequence; and
encoding the compressed sixth bit sequence to obtain the second bit sequence.

13. The method according to any one of claims 1 to 12, wherein the first bit sequence is obtained by performing polar code encoding on the to-be-encoded bit sequence.

14. A communication method, wherein the method comprises:
obtaining a symbol sequence;
obtaining a decoding result of the symbol sequence;
determining that the decoding result is incorrect;
sending feedback information to a transmit end;
obtaining a second bit sequence, wherein the second bit sequence comprises indication information of a bit in which a decoding error occurs; and
performing error correction on the decoding result based on the second bit sequence.

15. The method according to claim 14, wherein the method further comprises:
determining the feedback information based on a signal-to-noise ratio; or
determining the feedback information based on a Euclidean distance between the decoding result and the symbol sequence.

16. The method according to claim 15, wherein the determining the feedback information based on a signal-to-noise ratio comprises:
if the signal-to-noise ratio meets a first condition, determining that the feedback information is a bit sequence obtained by decoding the symbol sequence; or
if the signal-to-noise ratio meets a second condition, determining that the feedback information is the symbol sequence.

17. The method according to claim 15, wherein the determining the feedback information based on a Euclidean distance between the decoding result and the symbol sequence comprises:
if the Euclidean distance meets a third condition, determining that the feedback information is a bit sequence obtained by decoding the symbol sequence; or
if the Euclidean distance meets a fourth condition, determining that the feedback information is the symbol sequence.

18. The method according to claim 14, wherein the feedback information is a bit sequence obtained by decoding the symbol sequence, or the feedback information is the symbol sequence.

19. The method according to claim 18, wherein the feedback information is the bit sequence obtained by decoding the symbol sequence; and
performing error correction on the symbol sequence based on the second bit sequence comprises:
determining, based on the second bit sequence, a fourth bit sequence whose length is M, wherein M is an integer greater than 0;
determining, based on the fourth bit sequence, a third bit sequence whose length is m', wherein the third bit sequence represents decoding correctness of m bits, the m bits are a subset of a to-be-encoded bit sequence, m' is an integer greater than 0 and less than or equal to M, and m is an integer greater than or equal to m';
performing error correction on the m bits based on the third bit sequence; and
decoding the symbol sequence based on m error-corrected bits.

20. The method according to claim 19, wherein the performing error correction on the m bits based on the third bit sequence comprises:
decompressing the third bit sequence to obtain a fifth bit sequence whose length is m; and
performing error correction on the m bits based on the fifth bit sequence.

21. The method according to claim 19 or 20, wherein the determining, based on the fourth bit sequence, a third bit sequence whose length is m' comprises:
determining that the third bit sequence is m' information bits of the fourth bit sequence.

22. The method according to claim 21, wherein a location of the third bit sequence in the fourth bit sequence is locations of first m' bits that are in the fourth bit sequence and whose bit locations are sorted in descending order based on reliability and/or row weights of a corresponding generator matrix.

23. The method according to claim 18, wherein the feedback information is the symbol sequence; and
performing error correction on the symbol sequence based on the second bit sequence comprises:
obtaining, based on the second bit sequence, a sixth bit sequence whose length is R, wherein R is a quantity of bits in the to-be-encoded bit sequence, and the sixth bit sequence represents a location of a bit in which a decoding error occurs and that is in a decoded bit sequence; and
decoding the decoded bit sequence based on the sixth bit sequence.

24. The method according to claim 23, wherein the obtaining, based on the second bit sequence, a sixth bit sequence whose length is R comprises:
decoding the second bit sequence to obtain the sixth bit sequence.

25. The method according to claim 23, wherein the obtaining, based on the second bit sequence, a sixth bit sequence whose length is R comprises:
decoding the second bit sequence to obtain a decoding result of the second bit sequence; and
performing source decompression on the decoding result of the second bit sequence, to obtain the sixth bit sequence.

26. The method according to any one of claims 14 to 25, wherein the symbol sequence is a polar code symbol sequence.

27. A communication apparatus, comprising a processor, wherein the processor is configured to run a group of programs, so that the method according to any one of claims 1 to 13 is performed, or the method according to any one of claims 14 to 26 is performed.

28. The apparatus according to claim 27, further comprising a memory, wherein the memory stores the programs run by the processor.

29. The apparatus according to claim 27 or 28, wherein the apparatus is a chip or an integrated circuit.

30. A computer-readable storage medium, wherein the computer storage medium stores computer-readable instructions; and when the computer-readable instructions are run on a communication apparatus, the method according to any one of claims 1 to 13 is performed, or the method according to any one of claims 14 to 26 is performed.

31. A computer program product, wherein when the computer program product runs on a transmit end, the transmit end is enabled to perform the method according to any one of claims 1 to 13; or
when the computer program product runs on a receive end, the receive end is enabled to perform the method according to any one of claims 14 to 26.

32. A communication system, comprising a transmit end configured to perform the method according to any one of claims 1 to 13 and a receive end configured to perform the method according to any one of claims 14 to 26.
